Europäisches Patentamt

European Patent Office

Office européen des brevets

(19)

(11) Veröffentlichungsnummer: **0 009 283**
**B1**

# (12) EUROPÄISCHE PATENTSCHRIFT

(45) Veröffentlichungstag der Patentschrift:
24.02.82

(21) Anmeldenummer: 79200505.0

(22) Anmeldetag: 13.09.79

(51) Int. Cl.³: **C 08 F 10/02, C 08 F 2/34**

(54) **Verfahren und Einrichtung zur Energie-Rückgewinnung bei der Herstellung von Polymer aus Monomergas.**

(30) Priorität: 20.09.78 CH 9825/78

(43) Veröffentlichungstag der Anmeldung:
02.04.80 (Patentblatt 80/07)

(45) Bekanntmachung des Hinweises auf die Patenterteilung: 24.02.82 Patentblatt 82/08

(84) Benannte Vertragsstaaten:
AT BE DE FR GB IT LU NL SE

(56) Entgegenhaltungen:
DE - A - 2 047 349
FR - A - 2 313 399

(73) Patentinhaber: Kempf, Jacques G.
Schafmattweg 55
CH-4102 Binningen (CH)

(72) Erfinder: Kempf, Jacques G.
Schafmattweg 55
CH-4102 Binningen (CH)

(74) Vertreter: Eschmann, Heinz et al
A. Braun, Braun, Héritier, Eschmann AG Patentanwälte Holbeinstrasse 36-38
CH-4051 Basel (CH)

Imprimerie Jouve, 18, rue St-Denis, 75001 Paris, France

# Verfahren und Einrichtung zur Energie-Rückgewinnung bei der Herstellung von Polymer aus Monomergas

Die Erfindung betrifft ein Verfahren und eine Einrichtung zur Energie-Rückgewinnung bei der Herstellung von Polymer, insbesondere Hochdruck-Polyäthylen, aus Monomergas, wobei das Monomergas komprimiert und in einem Reaktor teilweise durch Polymerisation in Polymer umgewandelt wird.

Die Erfindung bezieht sich insbesondere auf die Anwendung dieses Energie-Rückgewinnungs-Verfahrens bei der Herstellung von Polyäthylen aus Aethylen-Monomergas durch das Hochdruckverfahren.

Bei diesem bekannten Hochdruck-Verfahren wird das Aethylengas auf hohe Drücke komprimiert (1 000-3 000 bar und mehr), wobei nur ein bescheidener Anteil dieses Monomergases durch Polymerisation in einem Reaktor in Polyäthylen umgewandelt wird. Der weit grössere Anteil des nicht reagierten Gases wird unwirtschaftlich, unter hohem Energieverbrauch, in einem Kompressions- und Entspannungskreislauf umgewälzt : Ein erheblicher Energieverschleiss in Anbetracht der bescheidenen Menge an gewonnenem Polyäthylen !

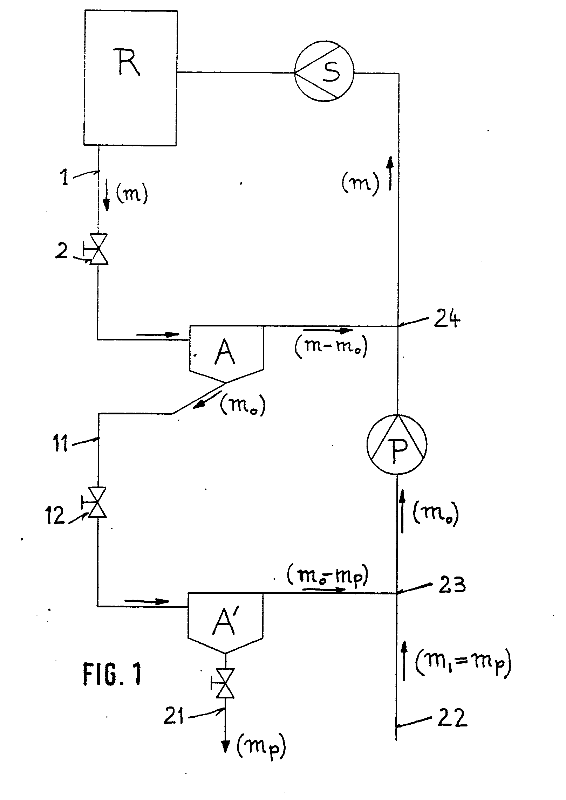

Das bekannte Hochdruckverfahren zur Herstellung von Polyäthylen aus Monomergas arbeitet grundsätzlich folgendermassen (vgl. Fig. 1) :

Bei der Herstellung von Polyäthylen im Hochdrück-Verfahren wird das über eine Leitung 24 zugeführte Aethylengas $C_2H_4$ stufenweise auf hohe Drücke komprimiert (1 000-3 000 bar und mehr, je nach Produkteigenschaften). Die Kompression erfolgt in einem Kolbenverdichter S.

Das Hochdruckgas (Mengenstrom m) strömt anschliessend in einen Reaktor R, wo durch Einspritzen eines Katalysators die Polymerisation bewirkt wird : nur ein kleinerer Teil (ca. 18-25 %) der totalen Gasmenge m im Reaktor wandelt sich in Polymer resp. Polyäthylen um ; der restliche weit grössere Teil, welcher nicht reagierte, verbleibt als Aethylen-Monomergas, welches mit dem Polymer in einer Art « Zweiphasenlösung » verbunden ist.

Bei diesem hohen Druck- und Temperaturzustand, den das Produkt beim Austritt aus dem Reaktor R in der Leitung 1 aufweist, sind Polymer und Aethylengas nicht trennbar.

Um das Polymer vom Monomergas zu trennen, wird der Stoffstrom m (Polymer + Monomergas) über ein Drosselventil 2 auf einen niedrigeren Trennungsdruck (ca. 250-300 bar) im Mitteldruck-Abscheider A entspannt : ein wesentlicher Mengenanteil an gebundenem Aethylengas wird frei (um 70 % von m).

Das getrennte, quasi polymerfreie Monomergas (Menge $m-m_0$) wird nun wieder durch neu zugeführtes Aethylengas (Menge = $m_0$), welches vom Primärkompressor P auf den Trennungsdruck in A verdichtet wurde, zum totalen Mengenstrom m ergänzt. Diese Gasmenge m wird vom Sekundärkompressor S auf Reaktordruck komprimiert und der Vorgang beginnt von neuem (Hochdruckkreislauf R-1-2-A-24-S-R).

Somit wird ein grosser Mengenanteil an nicht polymerisiertem Aethylengas, und zwar 3-4 mal die Menge des gewonnenen Polymers, im Hochdruckkreislauf rezirkuliert.

Der entsprechende Energieverbrauch für die Kompression, Kühlung und andere Vorgänge ist enorm im Vergleich zur bescheidenen Ausbeute an Polyaethylen. In der Tat, das gewonnene Polyaethylen entspricht lediglich 18-25 % des totalen Energieaufwandes. Die meiste Energie wird verbraucht zur Rekompression in S auf Reaktordruck des nicht in Polymer umwandelbaren Monomergases. Dabei geht der Energieinhalt des Stoffstroms m durch den Drosselvorgang 2 unausgenützt wieder verloren !

Dazu bewirkt der Drosselvorgang im Drosselventil 2 noch eine Temperaturerhöhung des Stoffstroms m, was die Trennbarkeit von Polymer und Monomer verschlechtert. Dies bedingt eine Abkühlung und entsprechenden Mehraufwand an Energie.

Das Polymer im Mitteldruckabscheider A bleibt noch mit ca. 10 % Monomergas verbunden. Dieser in der Leitung 11 abfliessende Stoffstrom der Menge $m_0$ (Polymer + monomeres Restgas) wird über ein Drosselventil 12 weiter auf tiefen Trennungsdruck im Niederdruckabscheider A' entspannt. Das entgaste Polyäthylen (Pos. 21) ist bereit zur Weiterverarbeitung (Menge $m_p$).

Das getrennte Aethylen-Restgas der Menge $m_0 - m_p$ wird mit frisch zugeführtem Aethylengas (Menge $m_1 = m_p$) vermischt (Vorgang A'-/22-23) und durch den Primärkompressor P auf den Druck in 24 verdichtet. Diese Gasmenge $m_0$ (ca. 30 % der Prozessmenge m) vermischt sich in 24 mit dem Monomergas von A kommend zur Totalmenge m.

Der Niederdruck-Vorgang (11-12-A'-23-P-24) führt zu einem weiteren Mehraufwand an Energie. Dieser Mehraufwand folgt aus dem Energieverlust durch die Drosselvorgänge 2 und 12, insofern auch der Anteil Restgas vom niedrigen Druck in A', durch P und S bis zum Reaktordruck wieder verdichtet werden muss.

Auch hier erfolgt eine Erwärmung des Stoffstroms durch die Drosselung 12, mit den gleichen Auswirkungen wie bereits erwähnt.

Die Herstellung von Polyäthylen im Hochdruck-Verfahren erfolgt somit bei einem energetisch schlechten Wirkungsgrad, wofür insbesondere die folgenden Gründe massgebend sind :

— der Polymerisationsvorgang findet bei hohen Drücken mit beträchtlichen Energieaufwand statt,

— die Menge an Polyaethylen, welche aus gesamten, im Prozess verarbeiteten Gasmenge m gewonnen wird, ist recht bescheiden,

— das Polymer + Monomergas sind beim hohen Druck- und Temperaturzustand nicht trennbar und gerade hier ist der volle Energieinhalt (Pos. 1) noch vorhanden,

— Notwendigkeit, den Stoffstrom m zur Trennung von Polymer und Monomergas auf niedrige Drücke zu entspannen,

— diese Entspannung mit einem Drosselventil (Pos. 2, 12) durchzuführen und die gespeicherte Energie unausgenützt zu vernichten,

— den Stoffstrom durch die Drosselung 2 und 12 zu erwärmen, was die Trennbarkeit bei höheren Drücken noch erschwert und zusätzliche Kühlenergie bedingt.

Der Erfindung liegt somit die Aufgabe zugrunde, ein Verfahren und eine Einrichtung zur Energie-Rückgewinnung bei der Hochdruck-Polyäthylen-Herstellung vorzuschlagen, die es gestatten, die im Stoffstrom m am Austritt des Reaktors R enthaltene Energie — statt durch Drosselung zu vergeuden — zur Verbesserung des Gesamtwirkungsgrades des Verfahrens über einen Arbeitsstrom m' aus Aethylengas zurückzugewinnen, nachdem dieser Arbeitsstrom m', von dem Polyäthylen getrennt, die Energie-Rückgewinnungseinheit — Entspannungsturbine — als quasi reines Gas ohne nennenswerten Anteil an Polymer beauschlagt.

Diese Aufgabe wird erfindungsgemäss dadurch gelöst, dass

— das aus dem Reaktor austretende Polymer-Gasgemisch im Düsensystem einer Energie-Austauscheinheit beschleunigt und entspannt wird,

— der Mengenstrom dieses Polymer-Gasgemisches in der Energie-Austauscheinheit mit einem quasi polymerfreien Arbeitsstrom bei gleichzeitiger Verdichtung vermischt wird,

— die quasi polymerfreie Gasmenge des Arbeitsstromes in einem Abscheider vom Gemisch getrennt und nach Passieren des Abscheiders in einen separaten Kreislauf strömt,

— im separaten Kreislauf der Arbeitsstrom einer Entspannungsturbine zugeführt und unter Energieabgabe in derselben entspannt wird,

— der Arbeitsstrom nach Austritt aus der Entspannungsturbine der Energie-Austauscheinheit zugeführt wird und im Bereich des Düsensystems der Energie-Austauscheinheit mündet,

— im Bereich des Düsensystems das aus dem Reaktor kommende Polymer-Gasgemisch und der Arbeitsstrom aus der Entspannungsturbine zusammengeführt werden, wobei der Arbeitsstrom kontinuierlich in der Energie-Austauscheinheit auf den Druck im Abscheider rekomprimiert wird.

Auf der beiliegenden Zeichnung ist ein Ausführungsbeispiel des Erfindungsgegenstandes veranschaulicht.

Fig. 2 veranschaulicht den Verfahrensablauf anhand eines Schemas,

Fig. 3 ist eine Schnittdarstellung der Energie-Austausch-Einheit mit Düsensystem und

Fig. 4 ist das Schema einer Verfahrensvariante.

In der nachfolgenden Beschreibung sind die bereits anhand von Fig. 1 eingeführten Bezugszahlen beibehalten worden.

Die folgenden Erläuterungen beziehen sich vorerst auf das Energie-Rückgewinnprinzip im Hochdruck-Kreislauf (R-1-A-24-S-R) zwischen Reaktor R und Mitteldruck-Abscheider A.

In der Leitung 1 herrscht der volle Reaktionsdruck (ca. 2 000 bar). Ventil 3 und 4 sind voll offen bzw. in leicht geschlossener Stellung zwecks Regelung. Ventil 2 ist prinzipiell geschlossen, kann aber durch leichtes Oeffnen bestimmte Regelzwecke erfüllen.

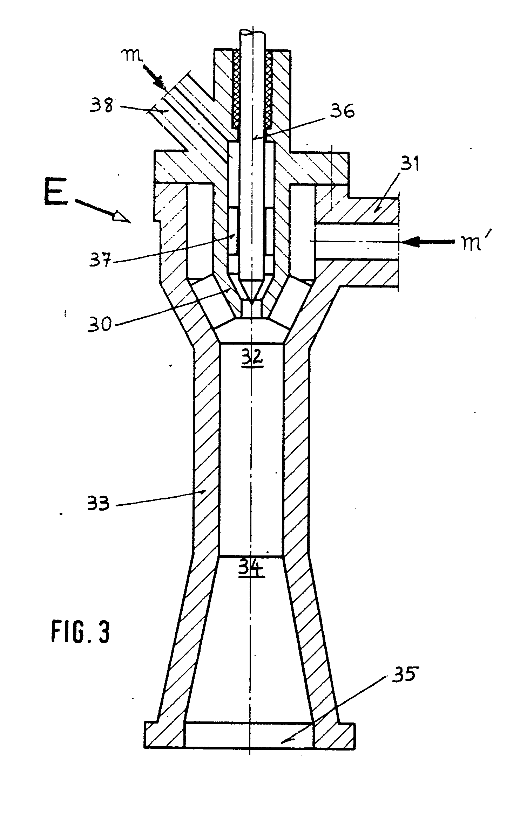

Die in Fig. 3 dargestellte Energie-Austauscheinheit E mit regelbarem Düsensystem zeigt eine an sich bekannte Entspannungsdüse 30 mit einer Reguliernadel 36 und Nadelsitz 37, einem Mantel 33, einem Einlassstutzen 38 für den Stoffstrom m, einem Einlassstutzen 31 für den Stoffstrom m' und einem Auslass 35.

Der Hochdruck-Stoffstrom der Menge m = 20 kp/sec. (Polymer + Aethylen-Monomergas) tritt in die Energie-Austauscheinheit E des Energie-Rückgewinn-Systems ein.

In einem Düsensystem 30, dessen Aufbau sich auf Fig. 3 ergibt, wird der Stoffstrom m = 20 kp/sec quasi verlustlos auf maximale Geschwindigkeit beschleunigt, wobei der statische Druck von 2000 bar auf einen Endwert (Stelle 32) von ca. 100 bar sinkt. Das Düsensystem ist regelbar und dem Strömungsvorgang eines Zweiphasenstroms Polymer + Monomergas (Unterschall- bis Ueberschallbereich) angemessen.

Der Stoffstrom $\dot{m}$ = 20 kp/sec strömt aus der Düse in einen umgrenzenden « Austauschmantel » 33 von angemessener Geometrie und Anordnung. Durch seinen Impuls bewirkt m einen Sog auf den sekundären Mengenstrom resp. Arbeitsstrom m' = 60 kp/Sec (Pos. 10) des Energie-Rückgewinn-Kreislaufs (3-E-4-A-/5 oder 6/-7-8-9-10). Der Arbeitstrom m' besteht aus quasi reinem Aethylengas.

Der Druck des Arbeitsstromes m' vor Eintritt in E (8-10), gleich 180 bar, ist kleiner als der Trennungsdruck im Abscheider A gleich 300 bar. In E wird m' beschleunigt (Vorgang 31-32) wobei der statische Druck von 180 auf ca. 100 bar (Zone 32) sinkt. Im Querschnitt 32 von E treffen beide Ströme m und m' zuzammen, mit anschliessender Vermischung (Uebergang von 32 nach 34) und Verdichtung auf der Strecke 32-34-35 von 100 auf 300 bar.

Durch diesen Vorgang in E wurde ein erheblicher Anteil der gespeicherten Leistung in m an m' übertragen, wobei der Energieinhalt des Arbeitsstromes m' vom tieferen Wert bei 180 bar (Pos. 8-10) auf den höheren Wert bei 300 bar (Pos. 35) gebracht wurde.

In E steht das Mengenverhältnis m' : m = 3 mit dem Verdichtungsgrad von m' (300 : 180 = 1,67) in einem exergetisch-optimalen Verhältnis, wodurch der Leistungsaustausch m zu m' und demnach die Leistungsfähigkeit und -verwertung von m', maximal sind.

Das Gemisch m + m' = 80 kp/sec strömt von E in den Mitteldruck-Abscheider A. Hier wird ein wesentlicher Anteil an Aethylen-Monomergas frei : der Arbeitsstrom m' = 60 kp/sec. plus eine Gasmenge (14 kp/sec), welche 70 % der Menge m entspricht. Uebrig bleibt (Pos. 11) eine Menge $M_0 = 6$ kp/sec, bestehend aus einem kleinen Teil nicht trennbarem Restgas (2 kp/sec, mengenmässig 10 % von m) + Polymer (4 kp/sec).

Das getrennte Monomergas der Menge $m' + (m - m_0) = 74$ kg/sec tritt aus dem Abscheider A als quasi reines Aethylengas (Vorgang A-5).

An der Stelle 24 strömt neues Aethylengas $m_0 = 6$ kp/sec vom Primärkompressor P kommend, zu. Dieser Gaszufluss erneuert die über (11) ausgeschiedene Stoffmenge $m_0 = 6$ kp/sec (Polymer + Restgas).

Die wieder vollständige Aethylen-Gasmenge $m = 60$ kp/sec (Pos. 6) geht zum Hochdruck-Sekundärkompressor S und wird auf Reaktordruck verdichtet (Vorgang 24-S-R).

Hingegen der Mengenanteil, welcher dem quasi polymerfreien Arbeitsstrom $m' = 60$ kp/sec entspricht, strömt in den separaten Kreislauf des Energie-Rückgewinn-Systems (Vorgang A-5-7 oder A-5-24-6-7).

Hier gibt der Arbeitsstrom m' die in E aufgenommene Leistung bei maximalem Wirkungsgrad an eine « Energie-Verwertungs-einheit T » ab (Vorgang 7-8) : man verwendet hierzu vorzugsweise eine radiale oder axiale Entspannungsturbine, welche über ein Getriebe einen Elektro-Generator, Kompressor oder anderes antreibt ; letztere verwandeln die von der Turbine abgegebene Leistung in nutzbare Energie.

Durch den Entspannungsvorgang (7-8) sinkt der Druck des Arbeitsstromes m' vom Ausgangswert in 7 (ca. 300 bar) auf den tieferen Wert in 8 (180 bar).

Danach wiederholt sich der Vorgang im Energie-Rückgewinn-Kreislauf (3-E/10-E/-4-A-5-7 oder 5-24-6-7/-8-9-10).

Damit ist das Prinzip des Energie-Rückgewinn-Systems und die Funktion des Arbeitsstromes m' definiert :

— den Energieinhalt (Zustand 1) des Stoffstromes m (Polymer + Monomergas) in E zu gewinnen und an den sekundären Arbeitsstrom m', aus quasi reinem Aethylengas, zu übertragen.

— die Aethylenmenge m' in einem Abscheidersystem A vom Gemisch m + m' zu trennen.

— diese Aethylenmenge m' als Arbeitsstrom (quasi polymerfrei) in einen separaten Energie-Rückgewinn-Kreislauf zu führen (Vorgang A-5-7 oder A-24-6-7).

— die vom Arbeitsstrom m' in E aufgenommene Energie an eine Energie-Verwertungseinheit T wieder abzugeben. Der Arbeitsstrom m' überträgt also die Leistung von m an T welche nutzbare Energie erzeugt.

— einen quasi polymerfreien Gasstrom resp. Aethylenstrom m' als Energieträger und Entspannungsmedium in T zu verwenden. Die Entspannung in T des Stoffstromes m (Polymer + Monomergas) würde wegen dem Polymer zu Problemen und schlechtem Wirkungsgrad führen.

Nebst optimaler Energierückgewinnung kommt dem Energie-Rück-gewinn-System eine weitere Bedeutung zu als KUEHLKREISLAUF.

Im bekannten Prozessvorgang ohne Energierückgewinn führt die Entspannung durch Drosselung im Ventil 2 zu einer Erwärmung des Stoffstromes m.

Mit dem Energie-Rückgewinn-System wird hingegen der Stoffstrom m, ohne zusätzlichen Energieaufwand, wesentlich abgekühlt :

a) Während der quasi verlustlosen Beschleunigung im Düsensystem von E kühlt sich der Stoffstrom m ab.

b) Durch die optimale Entspannung in der Turbine T erfährt der Arbeitsstrom m' einen wesentlichen Temperaturabfall. Die dadurch verfügbar gewordene Kühlleistung von m', bewirkt durch den Mischvorgang in E eine weitere Abkühlung des Stoffstromes m (Polymer + Monomergas).

c) Der Misch- und Verdichtungsvorgang in E führt zwar zu einem mässigen Temperaturanstieg des Gemisch m + m'. Gesamthaft gesehen ist aber eine wesentliche Abkühlung zu verzeichnen.

Diese Abkühlung begünstigt das Trennen von Aethylengas und Polymer bei gegebenem Abscheiderdruck. Dieser Trennungsdruck könnte dadurch erhöht werden bei gleichbleibender Menge an getrenntem Aethylengas. Durch Erhöhen des Drucks im Abscheider A wird die Kompressionsleistung von S kleiner (ein Gewinn !).

Das Energie-Rückgewinn-System kann bei verschiedenen, durch Herstellungsprozesse bedingte Polymerisationsdrücke und Mengenströme m arbeiten.

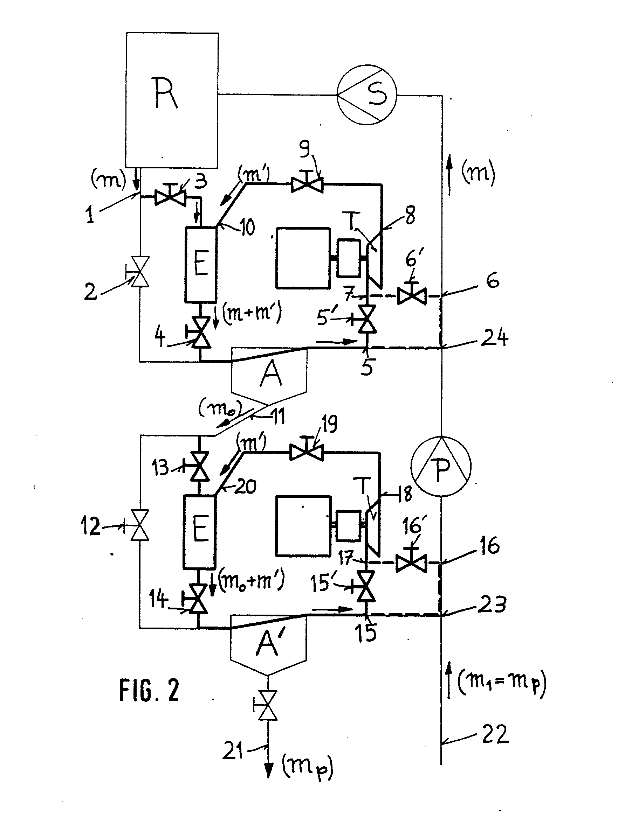

Durch die Ventile 3, 4, 5' oder 6' (Fig. 2) wird das Energie-Rückgewinn-System in resp. ausser Betrieb gesetzt. Bei geschlossener Stellung dieser Ventile ist das Energie-Rückgewinn-System ausser Betrieb und vom bekannten Prozessvorgang getrennt.

Die Produktionsanlage wird nach dem bekannten Vorgang ohne Energierückgewinn angefahren. Nach Stabilisierung der Produktion kann das Energie-Rückgewinn-System in Betrieb genommen werden, muss aber nicht.

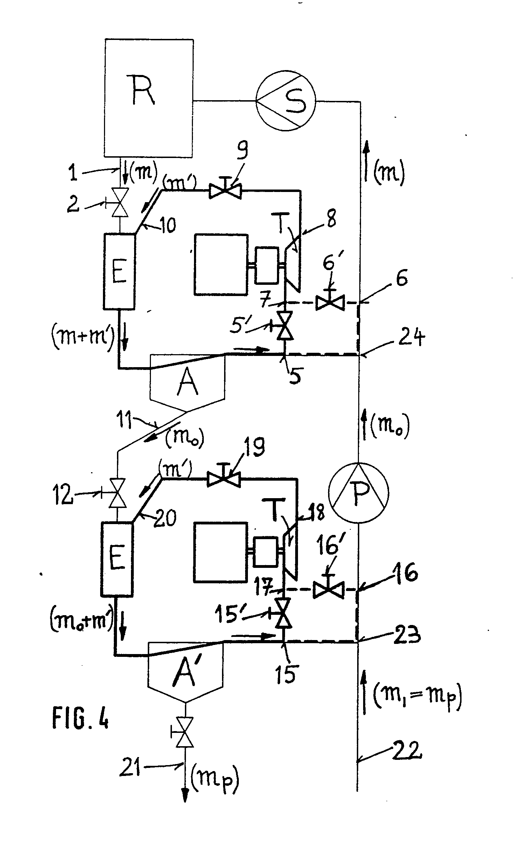

Eine Variante dieses Verfahrens zeigt das Schema nach Fig. 4.

Das Energie-Rückkgewinn-System kann ebenfalls in den bekannten Herstellungsprozess nach Fig. 1 gemäss Vorgang (E-A/5 oder 6/7-8-10) nach Fig. 4 integriert werden.

Sowohl mit als auch ohne zugeschaltetem Energie-Rückgewinn-System geht hier der Strömungsverlauf von m stets über E (Vorgang 1-2-E-A).

Durch Ventile 9, 5' oder 6' wird das Energie-Rückgewinn-System in resp. ausser Betrieb gesetzt. Bei ausgeschaltetem System (Ventile 9, 5' oder 6' geschlossen) wird E funktionslos durchströmt (m' = 0). Die Entspannung von m (Vorgang 1-A) wird durch das Ventil 2, bei offener Düsenstellung von E (Fig. 3, Pos. 30) bewirkt ; diese Entspannung kann ebenfalls durch die Düse von E (Pos. 30) übernommen werden (Ventil 2 offen resp. fällt weg).

Im übrigen sind Prinzip, Funktion und Arbeitsweise des Energie-Rückgewinn-Systems die gleichen wie zuvor beschrieben für Fig. 2.

Das Energie-Rückgewinn-System kann im Hochdruck-(R-1-2-A-24-S-R) wie im Niederdruck-vorgang (11-12-A'-23-P-24) integriert werden (siehe Fig. 2 und 4).

Im Niederdruckvorgang ist das Energie-Rück-gewinn-System definiert durch den Ablauf E-A'-15 oder 16/-17-18-19-20. Die Stoffmenge $m_0 = 6$ kp/sec (Zustand 11) besteht hier aus dem Polymer (4 kp/sec) plus das noch gebundene Aethylen-Restgas (2 kp/sec). Prinzip, Funktion und Arbeitsweise des Rückgewinn-Systems sind die gleichen wie oben beschrieben für den Hochdruckkreislauf.

Für je ein Energie-Rückgewinn-System im Hoch- und Niederdruckvorgang sind folgende Anordnungen beider Energie-Verwertungseinheiten T möglich :

a) beide Entspannungsturbinen sind auf der gleichen Welle und treiben via Getriebe ein Elektrogenerator, Kompressor oder anderes an.

b) jede Turbine ist separat, wobei beide über ein Getriebe nur einen Elektrogenerator, Kompressor oder anderes antreiben.

c) jede Energieverwertungseinheit T bildet ein vollständiges Maschinensystem für sich.

## Ansprüche

1. Verfahren zur Energie-Rückgewinnung bei der Herstellung von Polymer, insbesondere Hochdruck-Polyäthylen, aus Monomergas, wobei das Monomergas komprimiert und in einem Reaktor teilweise durch Polymerisation in Polymer umgewandelt wird, dadurch gekennzeichnet, dass

— das aus dem Reaktor (R) austretende Polymer-Gasgemisch (m) im Düsensystem (30) einer Energie-Austauscheinheit (Fig. 3) (E) beschleunigt und entspannt wird,

— der Mengenstrom (m) dieses Polymer-Gasgemisches in der Energie-Austauscheinheit (E) mit einem quasi polymerfreien Arbeitsstrom (m') desselben Gases bei gleichzeitiger Verdichtung vermischt wird,

— die quasi polymerfreie Gasmenge (m') des Arbeitsstromes in einem Abscheider (A) vom Gemisch (m+m') getrennt wird und nach Passieren des Abscheiders (A) in einen separaten Kreislauf (5 oder 6, 7, 9, E vgl. Fig. 2 obere Hälfte) strömt,

— im separaten Kreislauf der Arbeitsstrom (m') einer Entspannungsturbine (T) zugeführt und unter Energieabgabe in derselben entspannt wird,

— der Arbeitsstrom (m') nach Austritt aus der Entspannungsturbine (T) der Energie-Austauscheinheit (E) zugeführt wird und im Bereich (32) des Düsensystems (30) der Energie-Austauscheinheit (E) mündet,

— im Bereich (32) des Düsensystems (30) das aus dem Reaktor (R) kommende Polymer-Gasgemisch (m) und der Arbeitsstrom (m') aus der Entspannungsturbine (T) zusammengeführt werden, wobei der Gasstrom (m') kontinuierlich in der Energie-Austauscheinheit (E) auf den Druck im Abscheider rekomprimiert wird.

2. Verfahren nach Anspruch 1, dadurch gekennzeichnet, dass die Energie-Austauscheinheit (E) direkt in die Verbindungsleitung (1) zwischen dem Reaktor (R) und dem Abscheider (A) bzw. bei zweistufiger Anordnung in die Verbindungsleitung (11) zwischen den beiden Abscheidern (A-A') eingeschaltet ist. (Fig. 4)

3. Verfahren nach Anspruch 1, dadurch gekennzeichnet, dass die Energie-Austauscheinheit (E) der direkten Verbindungsleitung (1-A) zwischen dem Reaktor (R) und dem Abscheider (A) resp. bei zweistufiger Anordnung der Verbindungsleitung (11) zwischen den beiden Abscheidern (A-A') parallelgeschaltet ist. (Fig. 2)

4. Verfahren nach einem der Ansprüche 1 bis 3, dadurch gekennzeichnet, dass sowohl der im Düsensystem (30) der Energie-Austauscheinheit (E) beschleunigte Stoffstrom (m) als auch der in der Entspannungsturbine (T) entspannte Arbeitsstrom (m') dank der Beschleunigung bzw. Entspannung bei kleineren Verlusten eine Abkühlung erfährt und der Arbeitsstrom (m') das vom Reaktor (R) kommende Polymer-Gasgemisch (m) durch Vermischung in der Energie-Austauscheinheit (E) zusätzlich abkühlt.

5. Einrichtung zur Durchführung des Verfahrens nach einem der Ansprüche 1 bis 4, mit einem Reaktor, in welchem Monomergas teilweise durch Polymerisation in Polymer umgewandelt wird, gekennzeichnet durch die folgende Kombination :

— ein Düsensystem (30) zur Beschleunigung und Entspannung des aus dem Reaktor (R) austretenden Polymer-Gas-Gemisches,

— eine Energie-Austauscheinheit (E) zur Vermischung des Mengenstromes (m) dieses Polymer-Gas-Gemisches mit einem quasi polymerfrei-en Arbeitsstrom (m') desselben Gases bei gleichzeitiger Verdichtung,

— einen Abscheider (A) zur Abtrennung der quasi polymerfreien Gasmenge (m') des Arbeitsstromes vom Gemisch (m + m'),

— eine Entspannungsturbine (T) zur Entspannung des Arbeitsstromes (m') unter Energieabgabe,

— eine Verbindung zwischen der Entspannungsturbine (T) und der Energie-Austauscheinheit (E), welche Verbindung im Bereich (32) des Düsensystems (30) der Energie-Austauscheinheit (E) mündet, wobei

— die Energie-Austauscheinheit (E), in welcher das Düsensystem (30) angeordnet ist, je einen Anschluss für das aus dem Reaktor (R) eintreffende Polymer-Gas-Gemisch (m) und den Arbeitsstrom (m') aus der Entspannungsturbine (T) besitzt, derart, dass beide Substanzströme (m und m') im Bereich des Düsensystems (30) zusammentreffen.

## Claims

1. A method of recovering energy in the manufacture of polymers especially high pressure polyethylene from monomeric gas, by compressing and partially converting the monomeric gas into a polymer in a reactor by polymerization, comprising the steps of accelerating and decompressing the polymer-gas mixture (m) being discharged from the reactor (R) in a nozzle system (30) of an energy exchange unit (E), mixing the stream (m) of said polymer-gas mixture in the energy exchange unit (E) with an almost polymer-free working stream (m') of the same gas under simultaneous compression, separating the almost polymer-free gas (m') of the working stream from the mixture (m + m') in a separator (A) and passing it in a separate circuit (5 or 6/7, 9, E see Fig. 2, upper halve) after passing through the separator (A), conveying the working stream (m') in the separate circuit to a decompression turbine (T) and decompressing it therein by energy release, conveying the working stream (m') after being discharged from the decompression turbine (T) into the energy exchange unit (E) to the region (32) of the nozzle system (30) of the energy exchange unit (E), and in the region (32) of the nozzle system (30) conveying together the polymer-gas mixture (m) from the reactor (R) and the working stream (m') from the decompression turbine (T), wherein the working gas stream (m') is continuously re-compressed in the energy exchange unit (E) to the pressure in the separator.

2. A method as claimed in claim 1, wherein the energy exchange unit (E) is connected directly in the connection pipe (1) between the reactor (R) and the separator (A) or, if there is a two stage system, in the connection pipe (11) between two separators (A-A') (Fig. 4).

3. A method as claimed in claim 1, wherein the energy exchange unit (E) is connected in parallel to the direct connecting line (1-A) between the reactor (R) and the separator or, if there is a two stage system, to the connecting line (11) between the two separators (A-A') (Fig. 2).

4. A method as claimed in any one of claims 1 to 3, wherein both the stream of material (m) accelerated in the nozzle system (30) of the energy exchange unit (E) and the working stream (m') decompressed in the decompression turbine (T) are subject with smaller losses to cooling as a result of the acceleration and decompression, and the working stream (m') additionally cools the polymer-gas mixture (m) coming from the reactor (R) by mixing in the energy exchange unit (E).

5. Apparatus for performing the method according to any one of claims 1 to 4, with a reactor for partially converting monomeric gas into polymer by polymerization, the apparatus comprising a nozzle system (30) for accelerating and decompressing the polymer-gas mixture being discharged from the reactor (R), an energy exchange unit (E) for mixing the stream (m) of said polymer-gas mixture with an almost polymer-free working stream (m') of the same gas under simultaneous compression, a separatur (A) for separating the almost polymer-free gas (m') of the working stream from the mixture (m + m'), a decompression turbine (T) for decompressing the working stream (m') by energy release, a connection means between the decompression turbine (T) and the energy exchange unit (E), said connection means communicating with the region (32) of the nozzle system (30) of the energy exchange unit (E), wherein the energy exchange unit (E), in which the nozzle system (30) is disposed, comprises a connection for both the polymer-gas mixture (m) from the reactor (R) and the working stream (m') from the decompression turbine (T) such that both streams of material (m + m') meet in the region of the nozzle system (30).

## Revendications

1. Procédé de récupération d'énergie lors de la production d'un polymère, et en particulier de polyéthylène haute pression, à partir du monomère gazeux, suivant lequel on comprime le monomère gazeux et on le convertit partiellement, par polymérisation, en polymère dans un réacteur, caractérisé en ce que :
— on accélère et on détend le mélange de polymère et de gaz (m) quittant le réacteur (R) dans un système de tuyère (30) d'une unité d'échange d'énergie (E) (fig. 3),
— on mélange le courant complet (m) de ce mélange de polymère et de gaz dans l'unité d'échange d'énergie (E) avec un courant de travail (m') de ce même gaz quasi exempt de polymère, avec compression simultanée,
— on sépare le gaz (m') quasi exempt de polymère formant le courant de travail dans un séparateur (A) du mélange (m + m') et après passage par le séparateur (A), on le fait s'écouler dans un circuit distinct (5 ou 6, 7, 9, E) (voir fig. 2, moitié supérieure),
— on amène dans le circuit distinct le courant de travail (m') à une turbine de détente (T) et on le détend dans celle-ci en prélevant de l'énergie,
— on amène le courant de travail (m'), au sortir de la turbine de détente (T), à l'unité d'échange d'énergie (E) et on le fait s'écouler dans le domaine (32) du système de tuyère (30) de l'unité d'échange d'énergie (E),
— on réunit dans le domaine (32) du système de tuyère (30), le mélange de polymère et de gaz (m) provenant du réacteur (R) et le courant de travail (m') sortant de la turbine de détente (T), en recomprimant de manière continue le courant de gaz (m') dans l'unité d'échange d'énergie (E) jusqu'à la pression régnant dans le séparateur.

2. Procédé suivant le revendication 1, caractérisé en ce que l'unité d'échange d'énergie (E) est insérée directement dans la conduite de communication (1) entre le réacteur (R) et le séparateur (A) ou dans le cas d'un agencement en deux étages dans la conduite de communication (11) entre les deux séparateurs (A-A') (Fig. 4).

3. Procédé suivant la revendication 1, caractérisé en ce que l'unité d'échange d'énergie (E) est disposée en parallèle avec la conduite de communication directe (1-A) entre le réacteur (R) et le séparateur (A) ou, dans le cas d'un agencement en deux étages, avec la conduite de communication (11) entre les deux séparateurs (A-A') (Fig. 2).

4. Procédé suivant l'une quelconque des revendications 1 à 3, caractérisé en ce que tant le courant de matière (m) accéléré dans le système de tuyère (30) de l'unité d'échange d'énergie (E) que le courant de travail (m') détendu dans la turbine de détente (T) subissent, en raison de l'accélération ou de la détente, un refroidissement avec de faibles pertes et le courant de travail (m') refroidit davantage le mélange de polymère et de gaz (m) provenant du réacteur (R) par mélange dans l'unité d'échange d'énergie (E).

5. Installation pour la conduite du procédé suivant l'une quelconque des revendications 1 à 4 comprenant un réacteur dans lequel on convertit le monomère gazeux partiellement, par polymérisation, en un polymère, caractérisée en ce qu'elle comprend la combinaison suivante :

— un système de tuyère (30) pour l'accélération et la détente du mélange de polymère et de gaz quittant le réacteur (R),

— une unité d'échange d'énergie (E) pour le mélange du courant complet (m) de ce mélange de polymère et de gaz avec un courant de travail (m') de ce même gaz quasi exempt de polymère, avec compression simultanée,

— un séparateur (A) pour séparer le gaz (m') quasi exempt de polymère formant le courant de travail du mélange (m + m'),

— une turbine de détente (T) pour la détente du courant de travail (m'), avec prélèvement d'énergie,

— une communication entre la turbine de détente (T) et l'unité d'échange d'énergie (E), laquelle communication débouche dans le domaine (32) du système de tuyère 30 de l'unité d'échange (E), étant entendu que

— l'unité d'échange (E) dans laquelle est agencé le système de tuyère (30) comporte une admission pour le mélange de polymère et de gaz (m) entrant provenant du réacteur (R) et une admission pour le courant de travail (m') provenant de la turbine de détente (T) qui sont agencées de façon que les deux courants de matière (m et m') se réunissent dans le domaine du système de tuyère (30).

FIG. 1

FIG. 2

FIG. 3

FIG. 4